# EUROPEAN PATENT APPLICATION

(11) **EP 2 053 804 A2**
(43) Date of publication of application: **29.04.2009**
(21) Application number: 08167505.0
(22) Date of filing: 24.10.2008
(51) Int. Cl.: H04L 12/56

(54) **Radio controller, radio base station, radio communication system, call admission control method, program and recording medium**

(30) Priority: 26.10.2007 JP 2007279230
(71) Applicant: Nec Corporation, Tokyo 108-8001 (JP)
(72) Inventor: Kubota, Mitsuhiro c/o NEC Corporation, Minato-ku Tokyo (JP)
(74) Representative: Baronetzky, Klaus

(57) **Abstract**

In a radio controller, a radio communication system, and a call admission control method, even when services such as a voice call service and a streaming service other than the best effort service are provided in communication using a shared channel, it is possible to admit a new call while guaranteeing a predetermined throughput for users in communication, the users receiving best effort services through the communication via the shared channel.

The radio controller conducts call admission control for data communication between a radio terminal and a radio base station using a shared channel and includes a transceiver section for receiving, from a core network, a call admission request for a new call of data communication using the shared channel and a radio resource control section for admitting the new call if a throughput of existing calls assigned with a priority level equal to or less than a priority level set to the new call is equal to or more than a threshold value and for rejecting the new call if the throughput is less than the threshold value.

## Description

This application is based upon and claims the benefit of priority from Japanese patent application No. 2007-279230, filed on October 26, 2007, the disclosure of which is incorporated herein in its entirety by reference.

### BACKGROUND OF THE INVENTION

### Field of the Invention

The present invention relates to a radio controller, a radio base station, a radio communication system, a call admission control method, a program, and a recording medium, and in particular, to a technique to be suitably employed for call admission control in communication using a shared channel.

### Description of the Prior Art

Recently, in the third generation mobile communication system, high-speed communication is carried out by use of the High Speed Downlink Packet Access (HSDPA) via the down link. At present, the service provided using the HSDPA are limited to the best effort service. In future, however, it will be possible to provide services other than the best effort service, for example, the voice call service and the streaming service. If various services are provided using the HSDPA described above, it is quite likely that many users will utilize the HSDPA. This hence increases the demand for call admission control for HSDPA users.

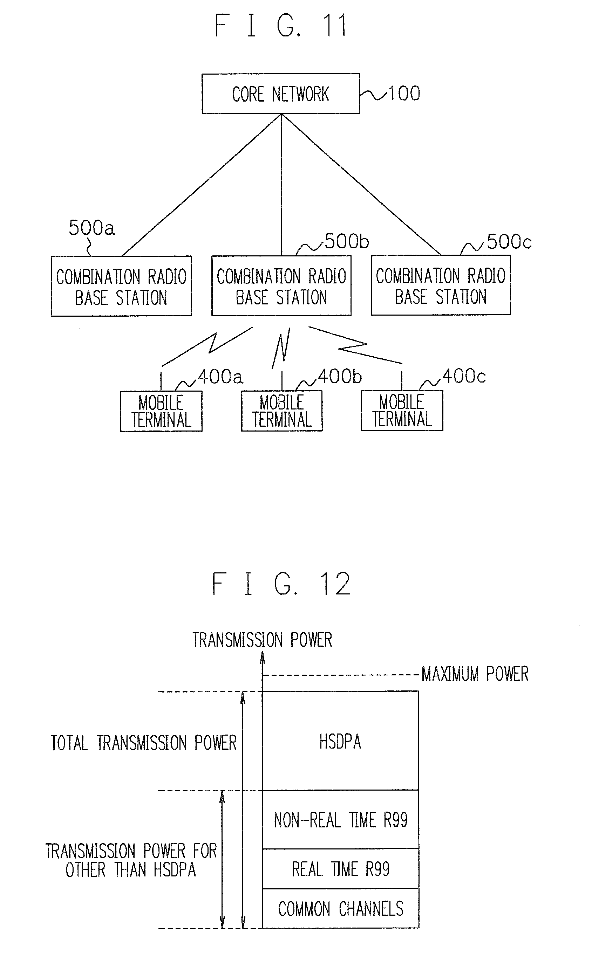

Among the resources, transmission power is most likely to be used up in the down link of the mobile communication system and is hence adopted as an index in the call admission control in general. The transmission power in a radio base station is classified into three usages, i.e., uses for the common channel, Release 99 (R)) individual channel and the HSDPA. FIG. 12 shows the distribution of the transmission power in the down link. In FIG. 12, "Real time" indicates the voice call and streaming services and "Non-real time" indicates the best effort service. Two methods are available to allocate transmission power to the HSDPA. In the first method, the transmission power for the HSDPA is assigned as a fixed value. In the second method, the transmission power used for the channels other than that of the HSDPA is subtracted from the maximum transmission power to allocate the resultant difference as the transmission power to the HSDPA. Discussion has been made for the call admission control of the HSDPA. In this regard, reference is to be made to Japanese Patent Laid-Open Publication Ser. No. 2007-159054 (article 1); pages 99 and 100 of "HSDPA/HSUPA for UMTS, High Speed Radio Access for Mobile Communications" edited by H. Holma and A. Toskala and published from John Wiley and Sons, 2006 (article 2); pages 255 and 260 of "Admission Control for Streaming Services over HSDPA" written by E. B. Rodrigues and J. Olsson in the Proceedings of the Advanced Industrial Conference on Telecommunications/Service Assurance with Partial and Intermittent Resources Conference/E-Learning on Telecommunications Workshop (Proceeding 17-20 July 2005, AICT/SAPIR/ELETE 2005; article 3); and pages 2498 to 2502 of "Quality Based HSDPA Access Algorithms" written by K. I. Pedersen (Vehicular Technology Conference, 2005; VTC-2005-Fall) in 2005 IEEE 62nd Volume 4, 25-28 Sept., 2005 (article 4). In these methods, the call admission control is carried out using the transmission power described above.

For example, article 3 describes a control method as below. The overall transmission power includes transmission power used by the Dedicated Channel (DCH), transmission power required for the streaming user employing a shared channel, i.e., the High Speed Downlink Shared Channel (HS-DSCH) to implement the Guaranteed Bit Rate (GBR), reserved transmission power, and transmission power of individual channels, i.e., Associated Dedicated Physical Channel (A-DPCH) used for a new call. If the total transmission power is equal to or less than a threshold value, a new call is admitted.

Also, for example, article 1 proposes a method of controlling call admission by a new radio terminal while securing radio resources required for the shared channel. The admission control method is similar to that of article 3 and is specifically as follows. Based on the radio state and a target transmission rate of a radio terminal conducting communication through a shared channel, the terminal calculates transmission power required to achieve the target transmission rate. the call admission control by a radio terminal initially conducting communication via an individual channel is controlled according to the calculated required transmission power, initial transmission power to initially start communication through the individual channel, and transmission power to accomplish communication via the individual channel.

For example, article 4 described a call admission control method by use of a Scheduling Priority Indicator representing call priority with a value ranging from 0 to 15. Specifically, a radio controller receives carrier transmit power, non-HSDPA power, and HS-DSCH required power via the Node B Application Part (NBAP) from a radio base station. Reference is to be made to "UTRAN lub Interface Node B Application Part (NBAP)" in March 2007 of 3GPP TS 25.433 V7.4.0 (2007-03). The total transmission power includes an estimated value of transmission power required for a new call, the sum of transmission power of existing calls having an SPI value equal to or more than the SPI value of the new call using the shared channel, i.e., HS-DSCH, transmission power required to transmit the control channel, i.e., High Speed shared Control Channel (HS-SCCH), and an offset value. If the total transmission power is equal to or less than the transmission power available for the HSDPA, the call is admitted.

In general, the best effort service requires a Guaranteed Bit Rate (GBR) of zero. In other words, the bit rate is not guaranteed. On the other hand, a GBR is required for the voice call service and the streaming service is not zero. Hence, if there is employed the method described in article 1 or 3, specifically, if the call admission control is accomplished only on the basis of the transmission power, it possibly occurs that the number of users who receives the voice call and streaming services increases. In short, according to the control methods, if many streaming users who requires, for example, a GBR more than zero are admitted, the packet transmission is preferentially carried out to achieve the GBR, and hence the packet transmission of the best effort service is postponed. This resultantly lowers the throughput for the users receiving the best effort service. Although the GBR is zero for the best service, it is not possible to provide the service if the GBR is actually zero.

In the HSDPA, the Scheduling Priority Indicator (SPI) is adopted to designate priority levels as described in article 4. In general, the voice call and streaming services have a higher priority level and the best effort services are assigned with a lower priority level. Therefore, the packets of the voice call and streaming services are preferentially processed, so that it is likely that the packets of the best effort services are processed with a delay. This results in the lowering of the throughput in the best effort services. Also, due to adoption of the SPI, the idea of Quality of Service (QoS) is taken into consideration in the method of article 4, and hence the method differs in this point from that of article 3. According to one aspect of the method of article 4, the existing calls having an SPI value equal to or more than that of a new call are taken into consideration. This however implies that the other existing calls with an SPI value less than that of the new call are neglected. For such neglected existing calls, the transmission power is possibly insufficient depending on cases, which reduces the throughput for the users receiving the best effort services.

As above, in the methods described in articles 1 to 4, there exists a fear that the throughput for the users receiving the best effort services is lowered. In the best effort services for which the GBR value is zero, the throughput may be lowered to a certain extent. However, if the throughput reduces to a great extent, the service quality is lowered for the users receiving the best effort services. Hence, for these users, the situation of the great reduction in the throughput is not tolerable.

### SUMMARY

It is therefore an exemplary object of the present invention, devised to solve the problem, to provide a radio controller, a radio communication system, and a call admission control method in which even when services such as a voice call service and a streaming service other than the best effort service are provided in communication using a shared channel, it is possible to accept a new call while guaranteeing a predetermined throughput for users who are in communication and who are receiving best effort services through the communication via the shared channel.

To achieve the exemplary object, the present invention has exemplary aspects as follows.

### <Radio controller>

In accordance with an exemplary aspect of the present invention, there is provided a radio controller for conducting call admission control for data communication between a radio terminal and a radio base station using a shared channel, including a transceiver section for receiving, from a core network, a call admission request for a new call of data communication using the shared channel and a radio resource control section for admitting the new call if a throughput of existing calls assigned with a priority level equal to or less than a priority level set to the new call is equal to or more than a threshold value and for rejecting the new call if the throughput is less than the threshold value.

### <Radio base station>

In accordance with an exemplary aspect of the present invention, there is provided a radio base station for conducting data communication with a radio terminal using a shared channel. The radio base station periodically transmits a mean throughput calculated for each priority level class with the number of users of each priority level class set as a modulus on the basis of data communication with the radio terminal, as a throughput of existing calls on the shared channel to a radio controller including a transceiver section for receiving, from a core network, a call admission request for a new call of data communication using the shared channel and a radio resource control section for admitting the new call if a throughput of existing calls assigned with a priority level equal to or less than a priority level set to the new call is equal to or more than a threshold value and for rejecting the new call if the throughput is less than the threshold value.

### <Radio communication system>

In accordance with an exemplary aspect of the present invention, there is provided a radio communication system including a radio terminal, a radio base station for conducting data communication with the radio terminal, and a radio controller for conducting call admission control for data communication between the radio terminal and the radio base station using a shared channel. The radio controller includes a transceiver section for receiving, from a core network, a call admission request for a new call of data communication using the shared channel, and a radio resource control section for admitting the new call if a throughput of existing calls assigned with a priority level equal to or less than a priority level set to the new call is equal to or more than a threshold value and for rejecting the new call if the throughput is less than the threshold value.

### <Call admission control method>

In accordance with an exemplary aspect of the present invention, there is provided a call admission control method for data communication between a radio terminal and a radio base station using a shared channel. The method includes a call admission request receiving step of receiving, from a core network, a call admission request for a new call of data communication using the shared channel and a call admission determination step of admitting the new call if a throughput of existing calls assigned with a priority level equal to or less than a priority level set to the new call is equal to or more than a threshold value and of rejecting the new call if the throughput is less than the threshold value.

### <Program>

In accordance with an exemplary aspect of the present invention, there is provided a program for making a radio controller conduct call admission control for data communication between a radio terminal and a radio base station using a shared channel. The program makes a computer implement a call admission request receiving function for receiving, from a core network, a call admission request for a new call of data communication using the shared channel and a call admission determination function for admitting the new call if a throughput of existing calls assigned with a priority level equal to or less than a priority level set to the new call is equal to or more than a threshold value and for rejecting the new call if the throughput is less than the threshold value.

### <Recording medium>

In accordance with an exemplary aspect of the present invention, there is provided a computer-readable recording medium having recorded the program described above.

### BRIEF DESCRIPTION OF THE DRAWINGS

The exemplary objects and features of the present invention will become more apparent from the consideration of the following detailed description taken in conjunction with the accompanying drawings in which:
FIG. 1 is a schematic block diagram showing a system configuration of an exemplary embodiment of a radio communication system in accordance with the present invention;
FIG. 2 is a flowchart showing a flow of call admission control in the exemplary embodiment;
FIG. 3 is a block diagram showing an internal configuration of a radio controller in the exemplary embodiment;
FIG. 4 is a block diagram showing an internal configuration of a radio base station in the exemplary embodiment;
FIG. 5 is a sequence chart showing operations of respective apparatuses and a flow of data between the apparatuses from when an admission request takes place for a new call to when communication is started in the exemplary embodiment;
FIG. 6 is a sequence chart showing a flow of operations of respective apparatuses for the calculation and transmission of the throughput of an existing call in the exemplary embodiment;
FIG. 7 is a flowchart showing a flow of call admission control in the exemplary embodiment;
FIG. 8 is a flowchart showing a flow of mean throughput calculation processing in the exemplary embodiment;
FIG. 9 is a diagram showing an example of threshold value data adopted for call admission control in the exemplary embodiment;
FIG. 10 is a diagram showing an example of threshold value data for call admission control in the exemplary embodiment;
FIG. 11 is a block diagram showing a system configuration of an exemplary embodiment of a radio communication system in accordance with the present invention; and
FIG. 12 is a diagram to explain the constituent components of transmission power in the radio communication system.

### EXEMPLARY EMBODIMENT

Referring next to the accompanying drawings, description will be given of an exemplary embodiment in accordance with the present invention.

### <First exemplary embodiment>

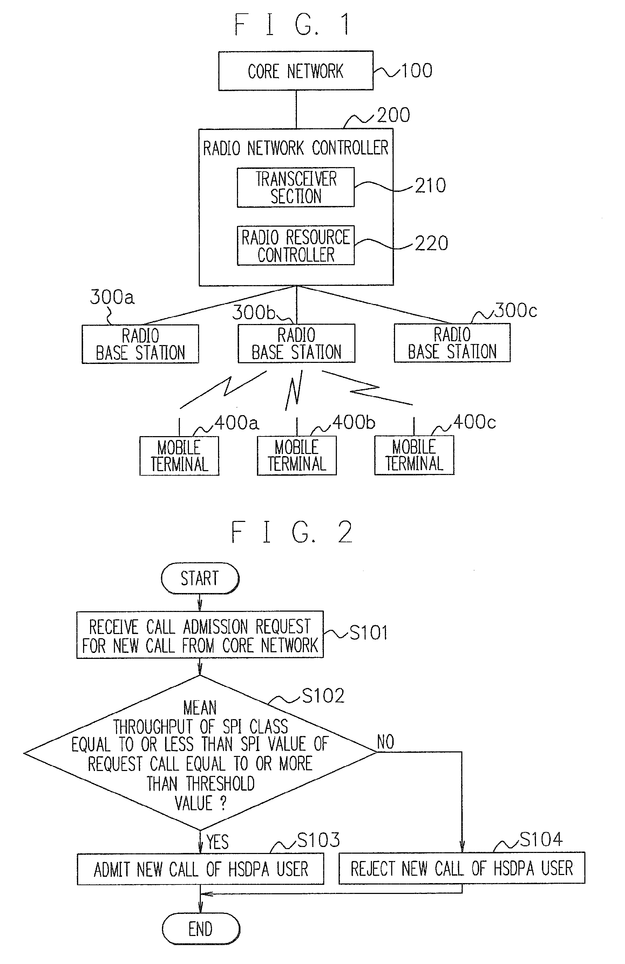

FIG. 1 shows a first exemplary embodiment of a radio communication system in accordance with the present invention. The system includes a core network 100, a radio network controller 200 including a transmitter/receiver or transceiver section 210 and a radio resource controller 220, radio base stations 300, and mobile terminals 400. In the radio communication system, call admission control is carried out for a new call on the basis of throughput of existing calls in the communication employing a shared channel. The operation is specifically conducted according to the flow shown in FIG. 2. In the first exemplary embodiment, description will be given of an example of the communication accomplished via a shared channel by use of the HSDPA.

First, the radio network controller 200 receives a call admission request for a new call via the HSDPA from the core network 100 (step S101). In response to the call admission request from the core network 100, the radio network controller 200 starts the call admission control for the new call. The radio network controller 200 compares the throughput of existing calls of the HSDPA assigned with a priority level equal to or less than a priority level set to the new call with a threshold value (step S102). The priority level is a priority index. In the exemplary embodiment, a Scheduling Priority Indicator (SPI) ranging from 0 to 15 is adopted as the priority index for calls. If the throughput of the existing calls is equal to or more than the threshold value (yes in step S102), the system allows admission for the new call of the HSDPA user (step S103). Contrarily, if the throughput is less than the threshold value (no in step S102), the system rejects admission for the new call of the HSDPA user (step S104).

In the first exemplary embodiment, when a new call is to be admitted, the radio controller confirms the SPI value required by the new call. The radio controller compares the mean throughput of existing users receiving services having an SPI value equal to or less than that of the new call with a threshold value. As a result, if the mean throughput is equal to or more than the threshold value for all of the SPI values, the radio controller admits the new call. Through the operation, even when the voice call and streaming services are provided using the HSDPA, the system guarantees the throughput equal to or more than the threshold value for the group of users receiving best effort services having a smaller SPI value. That is, even when the radio base station has surplus transmission power, if the throughput of best effort services is equal to or less than a fixed value, the system rejects the user requesting a new voice call or streaming service.

Description will now be given in more detail of the first exemplary embodiment of the radio communication system. First, description will be given of configuration of the first exemplary embodiment, and then the exemplary embodiment will be described mainly for operations centered on the call admission control.

FIG. 1 shows a system configuration of the first embodiment of the radio communication system. The system includes a core network 100, a radio network controller 200, radio base stations 300 (300a to 300c) and mobile terminals 400 (400a to 400c). Although the system of FIG. 1 includes three radio base stations 300 and three mobile terminals 400, this configuration is only an example, but the number of the base stations and that of the mobile terminals may be arbitrarily designated.

The core network 100 includes a function to communicate data with the radio network controller 200 and a function to provide QoS information of a service requested by the user. The core network 100 transmits an admission request (RANAP RAB Assignment Request) for a new call to be sent from or to be received by the mobile terminal 400, to thereby establish a communication path or bearer to the radio network controller 200. The core network 100 transmits user data such as the QoS information via the established bearer to the radio network controller 200.

The radio network controller 200 includes a transceiver section 210 and a radio resource controller 220. The transceiver section 210 possesses a function to communicate data with the core network 100 and a function to communicate data with the radio base stations 300. In the data communication with the core network 100, when the new call admission request (RANAP RAB Assignment Request) is received from the core network 100, the transceiver section 210 establishes a bearer to the core network 100 to acquire QoS information for a service requested by the user. Based on the QoS information thus obtained, the transceiver section 210 calculates the SPI value indicating the priority level of the service of the new call for which the admission request is issued.

Also, for data communication with the radio base station 300, when an admission request (RRC Connection Request) of a new call, which is transmitted from or which is received by the mobile terminal 400, is received from the radio base station 300, the transceiver section 210 establishes a bearer to the radio base station 300. The transceiver section 210 then sends an SPI value of the new call to the radio base station 300 and receives radio environment information from the radio base station 300. The radio environment information indicates information such as a radio state, a mean throughput, and an error ratio in the communication between the mobile terminal 400 and the radio base station 300. In the radio network controller 200, the radio resource controller 220 conducts call admission control using the radio environment information from the radio base station 300.

The radio base station 300 includes a function to communicate data with the mobile terminals 400. When the terminal 400 transmits or receives a new call, the radio base station 300 sends an admission request (RRC Connection Request) for the new call to the radio network controller 200 to establish a bearer to the radio network controller 200. Also, the radio base station 300 includes a function to measure throughput values for the respective mobile terminals 400, calculate a mean throughput in SPI units with, as a modulus, the number of users of existing calls for the respective SPI values, and report the mean throughput to the radio network controller 200.

The mobile terminal 400 includes a function to communicate data by radio with the radio base stations 300 and report the radio environment to the radio base station 300.

Although each of the constituent components shown in FIG. 1 includes, various known functions in addition to the functions above, description will be given only of the functions closely related to exemplary embodiments of the present invention. Detailed description thereof will be omitted.

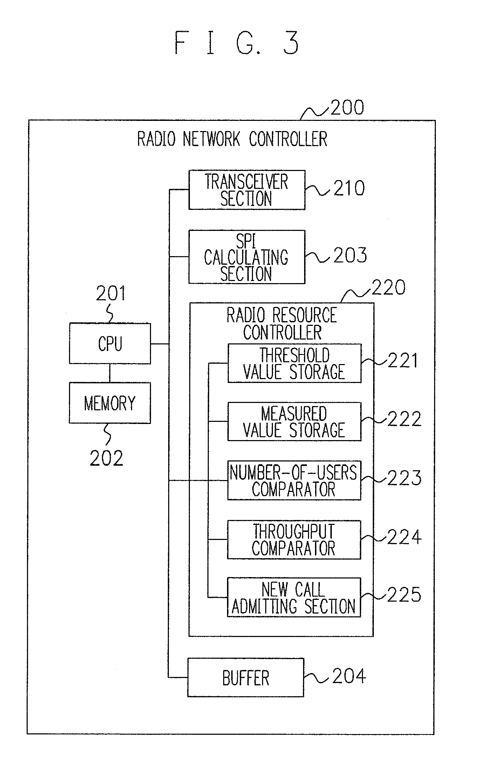

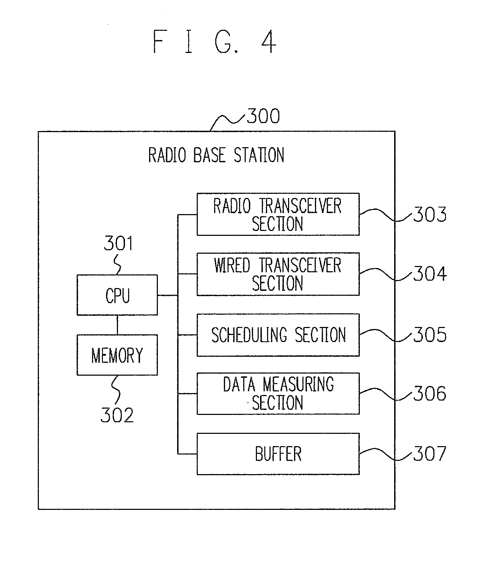

Description will now be given of the radio controller and the radio base station which serve as a kernel of the first exemplary embodiment of the radio communication system. FIG. 3 is a block diagram showing internal structure of the radio controller of the exemplary embodiment and FIG. 4 shows internal structure of the radio base station of the exemplary embodiment.

Referring now to FIG. 3, description will be given of the configuration of the radio network controller 200 of the exemplary embodiment. The radio network controller 200 includes a Central Processing Unit (CPU) 201, a memory 202, a transceiver section 210, an SPI calculating section 203, a radio resource controller 220, and a buffer 204. The radio resource controller 220 includes a threshold value storage 221, a measured value storage 222, a number-of users comparator section 223, a throughput comparator section 224, and a new call admitting section 225.

The CPU 201 controls the overall operation of the radio network controller 200 and transmits an SPI calculation command to the SPI calculating section 203 and a call admission control command to the radio resource controller 220. The memory 202 stores therein a control program for the overall operation of the radio network controller 200 and a call admission control program, the programs being executed by the CPU 201.

The transceiver section 210 is a communication module to communicate data with the core network 100 and the radio base stations 300. For example, the transceiver section 210 receives QoS information from the core network 100, transmits an SPI value of a new call to the radio base station 300, and receives radio environment information therefrom. On the basis of the QoS information from the core network 100, the SPI calculating section 203 calculates the SPI value of the new call for which the admission request is issued.

The threshold value storage 221 stores therein a threshold value for the number of users in the HSDPA communication for comparison of the number of users and a threshold value of a mean throughput for each SPI class for the throughput comparison. The measured value storage 222 stores therein the radio environment information obtained from the radio base station 300 as measured values which are compared with the threshold value in the comparison of the number of users and the throughput comparison.

The number-of-users comparator 223 compares the threshold value for the number of users thus stored in the threshold value storage 221 with the number of users being actually in communication via the HSDPA stored in the measured value storage 222, and returns a result of the comparison to the new call admitting section 225. The throughput comparator 224 compares the threshold value for the mean throughput stored in the threshold value storage 221 with the mean throughput for each SPI stored in the measured value storage 222 and then sends a result of the comparison to the new call admitting section 225.

The new call admitting section 225 determines, by using the comparison results from the number-of-users comparator 223 and the throughput comparator 224, admission or rejection for the new call associated with the admission request according to an admission control algorithm provided by the present invention. If admission of the new call is allowed, the new call admitting section 225 executes call admission processing.

The buffer 204 is a work area employed for the SPI calculation and for the call admission control as in the exemplary embodiment and is also used to control operation of the radio network controller 200.

Subsequently, referring to FIG. 4, description will be given of the configuration of the radio base station 300 in the exemplary embodiment. The radio base station 300 includes a CPU 301, a memory 302, a radio transceiver section 303, a wired transceiver section 304, a scheduling section 305, a data measuring section 306, and a buffer 307.

The CPU 301 controls the overall operation of the radio base station 300 and transmits a mean throughput calculation command to the scheduling section 305 and a mean throughput transmission command to the wired transceiver section 304. The memory 302 stores therein programs to be executed by the CPU 301, i.e., a control program for the overall operation of the radio base station 300 and a mean throughput transmission control program.

The radio transceiver section 303 is a communication module to communicate data with the mobile terminals 400 and receives, for example, radio environment information from the mobile terminal 400. The wired transceiver section 304 is a communication module to communicate data via a wire with the radio network controller 200. For example, the wired transceiver section 304 receives an SPI value of a new call from the radio network controller 200 and transmits radio environment information thereto.

The data measuring section 306 measures the throughput which the radio base station 300 provides in the communication with each mobile terminal 400. The scheduling section 305 totals the throughput measured by the data measuring section 306 for each SPI class and calculates the mean throughput for each SPI, by using, as a modulus, the total number of users of each SPI.

The buffer 307 is a work area for controlling for calculation and transmission of the mean throughput in the exemplary embodiment, and also employed to carry out the operation control for the radio base station 300.

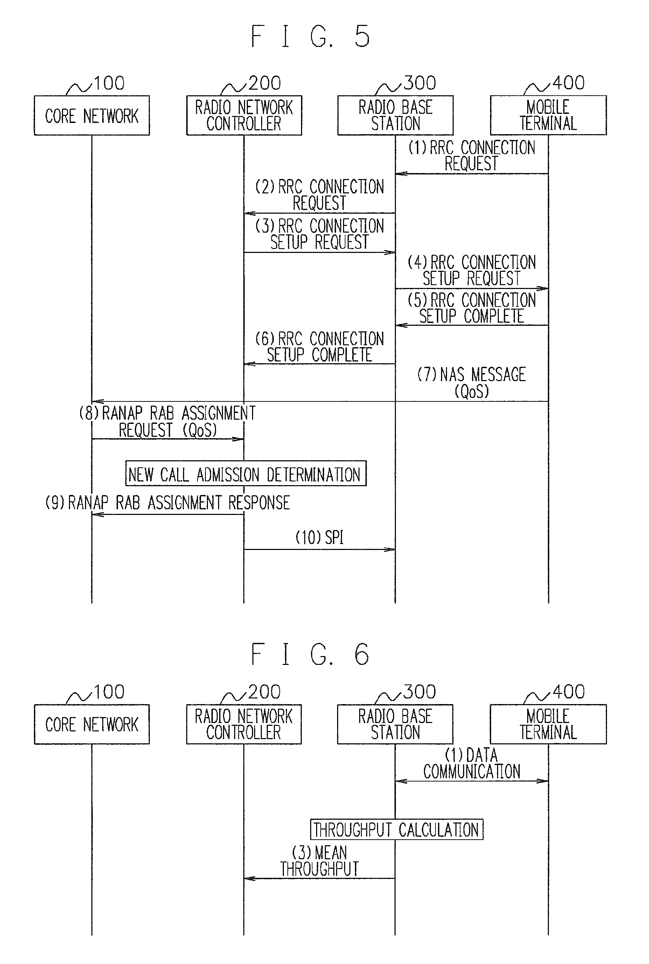

Next, description will be specifically given of a general flow of operation in each constituent component associated with the new call admission control and the throughput calculation according to the exemplary embodiment. FIG. 5 is a sequence chart showing a flow of operation and data between the respective components from occurrence of a new call admission request to start of communication. FIG. 6 shows a sequence of operation in the respective constituent components for calculation and transmission of the throughput of existing calls. Referring now to FIG. 5, description will be first given of the flow from the occurrence of a new call admission request to the start of communication.

For example, if the mobile terminal 400 sends a new call, there occurs an admission request for the new call. The mobile terminal 400 sends a new call admission request (RRC Connection Request) to the radio base station 300 ((1) of FIG. 5). The radio base station 300 transfers the new call admission request (RRC Connection Request) to the radio network controller 200 ((2) of FIG. 5). When the request is received, the radio network controller 200 sends a bearer establishing request (RRC Connection Setup Request) to the radio base station 300 to establish a bearer to the radio base station 300 (specifically, to establish a bearer via the radio base station 300 to the mobile terminal 400; (3) of FIG. 5).

The radio base station 300 receives and transfers the bearer establishing request (RRC Connection Setup Request) to the mobile terminal 400 ((4) of FIG. 5). When the bearer establishing request (RRC Connection Setup Request) is received, the mobile terminal 400 sends a bearer establishment completion signal (RRC Connection Setup Complete) to the radio base station 300 ((5) of FIG. 5). The radio base station receives and transfers the bearer establishment completion signal (RRC Connection Setup Complete) to the radio network controller 200 ((6) of FIG. 5). At a point of time when the radio network controller 200 receives the bearer establishment completion signal (RRC Connection Setup Complete), the bearer is established between the radio network controller 200 and the base station 300 to enable to communicate control data therebetween.

After the bearer is thus set up to the radio network controller 200, the mobile terminal 400 transmits a message (NAS message) to the core network 100 ((7) of FIG. 5). The message is fed to provide service information (QoS information) from the mobile terminal 400 to the core network 100. When the message (NAS message) is received, the core network 100 sends a new call admission request (RANAP RAB Assignment Request) to the radio network controller 200 ((8) of FIG. 5). The new call admission request (RANAP RAB Assignment Request) includes the QoS information which the core network 100 has attained from the mobile terminal 400.

When the call admission request (RANAP RAB Assignment Request) including the QoS information of the new call is received, the radio network controller 200 calculates an SPI value of the new call on the basis of the QoS information and then determines admission or rejection of the new call by comparing the throughput of existing calls with a threshold value. The operation to determine admission or rejection of the new call will be described later in detail.

After the determination is completed, the radio network controller 200 transmits a new call admission response (RANAP RAB Assignment Response) to the core network 100 ((9) of FIG. 5). The new call admission response (RANAP RAB Assignment Response) includes the result of the determination, i.e., admission or rejection of the new call. At a point of time when the core network 100 receives the new call admission response (RANAP RAB Assignment Response) from the radio network controller 200, a bearer is established between the radio network controller 200 and the core network 100 to enable to communicate data between the nodes.

If the determination result is allowance of the admission of the new call, the radio network controller 200 sends the SPI of the new call calculated as above, to the radio base station ((10) of FIG. 5). This makes the radio base station 300 calculate the throughput when data is communicated in association with the admitted new call. If the determination result is rejection of the admission of the new call, the radio network controller 200 does not send the SPI of the new call to the radio base station 300. The radio network controller 200 only transmits the new call admission response (RANAP RAB Assignment Response) to the core network 100.

Description has been given of a case wherein the request is transmitted from the mobile terminal 400. Next, description will be given of a situation in which the request is received by the mobile terminal 400. First, the radio network controller 200 conducts a paging operation. As a result, a call is delivered to all mobile terminals 400 existing in a particularly area. Thereafter, the new call admission control is carried out in the same way as for the flow ranging from (1) to (10) shown in FIG. 5.

Referring next to FIG. 6, description will be given of flows of calculation and transmission of the throughput of existing calls. The operation of the radio base station 300 to calculate the throughput of existing calls is independent of the new call admission control of the radio network controller 200. The throughput is calculated at predetermined timing and then data of the calculated throughput is fed to the radio network controller 200. First, data is communicated between the mobile station 400 and the radio base station 300, and information regarding each communication is stored for each SPI class in the radio base station 300 ((1) of FIG. 6). Using the information thus stored at predetermined timing, the radio base station 300 calculates the throughput (mean throughput) of existing calls for each SPI class and delivers the throughput as a measured value to the radio network controller 200 ((2) of FIG. 6). Each time the throughput data is received from the radio base station 300, the radio network controller 200 updates the latest measured value of the throughput data and keeps the value therein. Thereafter, the radio base station 300 repeatedly accomplishes the calculation and the transmission of the throughput at predetermined timing.

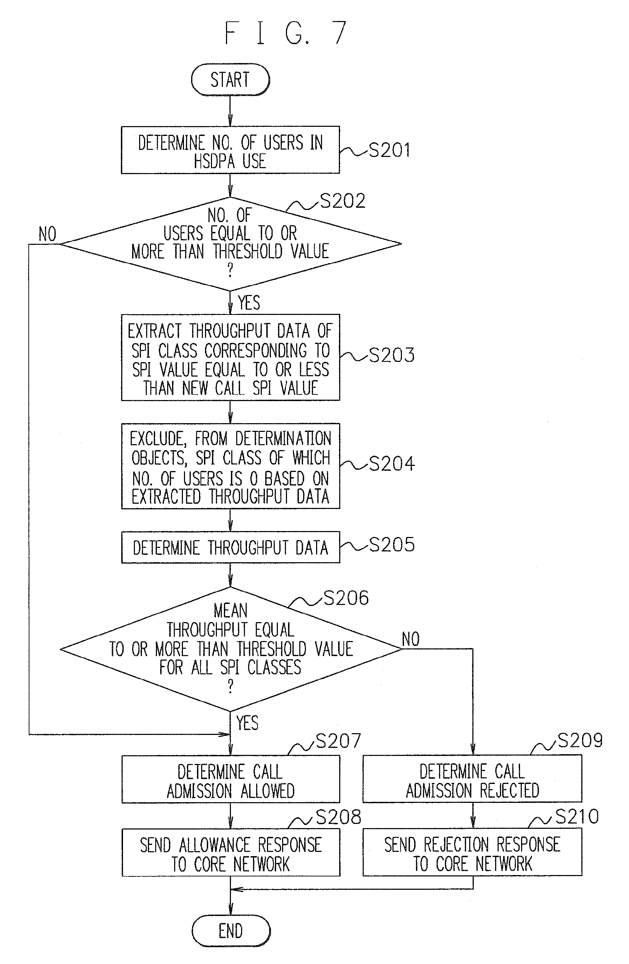

Description will now be specifically given of the call admission control (determination of admission or rejection of the new call) described in conjunction with FIG. 5. FIG. 7 is a flowchart showing a flow of the call admission control in the exemplary embodiment, specifically, showing in detail the operation of step S102 and subsequent steps of FIG. 2.

At occurrence of the call admission request for a new call, the number-of-users comparator 223 of the radio network controller 200 determines the number of users in communication via the HSDPA (step S201). The number-of-users comparator 223 compares data of the number of users (a threshold value of the number of users in the HSDPA communication) in the threshold value storage 221 with the number-of-users data (the measured value of the number of users in the HSDPA communication) in the measured value storage 222. If the measured value is equal to or more than the threshold value (yes in step S202), the process goes to the throughput comparison (step S203). If the measured value is less than the threshold value, the system determines admission for the new call (step S207).

When compared with the flow of FIG. 2, the flowchart of FIG 7 additionally includes the determination of the number of users for the following reason. By conducting the number-of-users determination, the processing to determine admission or rejection of the call using the throughput may be dispensed with depending on cases. This advantageously leads to reduction in the load imposed onto the radio network controller 200.

In the radio network controller 200, if the measured value is equal to or more than the threshold value as a result of the number-of-users comparison, the throughput comparator 224 conducts comparison for the throughput of the SPI class having an SPI value equal to or less than the SPI value of the new call. In the throughput comparison, the comparison object is first determined. From the mean throughput data in the measured value storage 222, the throughput comparator 224 extracts throughput data for the SPI class having an SPI value equal to or less than the SPI value of the new call (step S203). The new call SPI value is calculated on the basis of the QoS information acquired from the core network 100. From the extracted throughput data for the SPI class, the throughput comparator 224 excludes throughput data of the SPI class of which the number of users is zero and then sets, as the determination object, the throughput data of which the number of users is at least one (step S204). The throughput comparator 224 compares the mean throughput of the measured value determined as the object with the threshold value of the mean throughput in the threshold value storage 221.

Also, as compared with the flow of FIG. 2, the flowchart of FIG 7 additionally includes the processing to exclude the throughput of which the number of users is zero for the following reason. By conducting this processing, it is possible to dispense with the data comparison not actually required. This results in an advantage in which the load imposed onto the radio network controller 200 is lowered and the determination processing speed is increased.

As a result of the comparison in the throughput comparator 224, if the mean throughput of the measured value is equal to or more than the threshold value for all SPI classes (yes in step S206), the new call admission module 225 determines allowance for the admission of the new call (step S207). In the radio network controller 200, the transceiver section 210 transmits a new call admission response (RANAP RAB Assignment Response) including an admission allowance indication to the core network 100 (step S208). In this situation, the transceiver section 210 sends an SPI of the new call to the radio base station 300. If the mean throughput of the measured value is less than the threshold value for any one SPI class (no in step S206), the new call admission module 225 determines rejection for the admission of the new call (step S209). The transceiver section 210 delivers the new call admission response (RANAP RAB Assignment Response) including an admission rejection indication to the core network 100 (step S210).

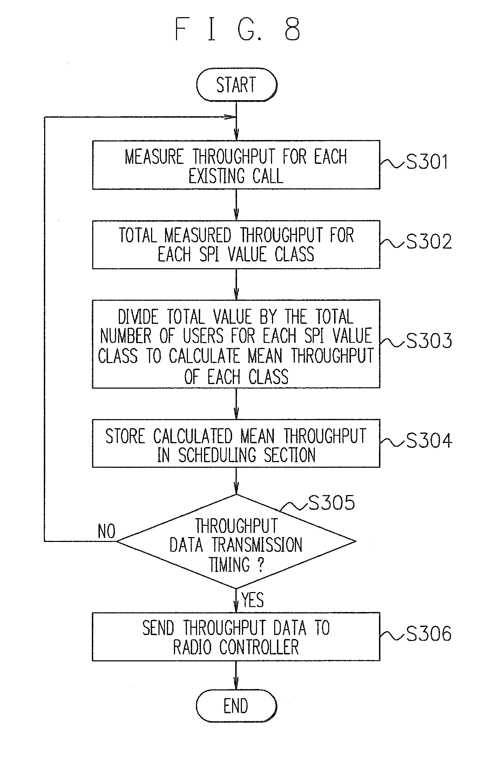

Description will be given more in detail of the calculation and the transmission of the mean throughput described in conjunction with FIG. 6. FIG. 8 is a flowchart showing flows of the calculation and transmission processing of the mean throughput according to the exemplary embodiment.

The data measuring section 306 measures the amount of data communicated, i.e., transmitted or received, by the radio base station 300 with the mobile terminals 400 per unitary time, namely, the throughput of each existing call (step S301). The scheduling section 305 then totals the measured throughput for each SPI value class (step S302). The scheduling section 305 divides the total value by the total number of users for each SPI class to obtain a mean throughput for each SPI class (step S303). The scheduling section 305 stores the obtained mean throughput of each SPI class in a storage, not shown (step S304). During a period of time except the transmission timing of the throughput data (no in step S305), the data measuring section 306 and the scheduling section 305 of the radio base station 300 repeatedly conduct the operation described above (step S301).

At timing when the throughput data, i.e., the mean throughput data for each SPI class or data indicating the number of users is to be fed to the radio network controller 200 (yes in step S305), the radio base station 300 sends the throughput data to the radio network controller 200 (step S306). The throughput data transmission timing may be set by using data of time or may be set on the basis of the number of throughput data items measured by the data measuring section 306.

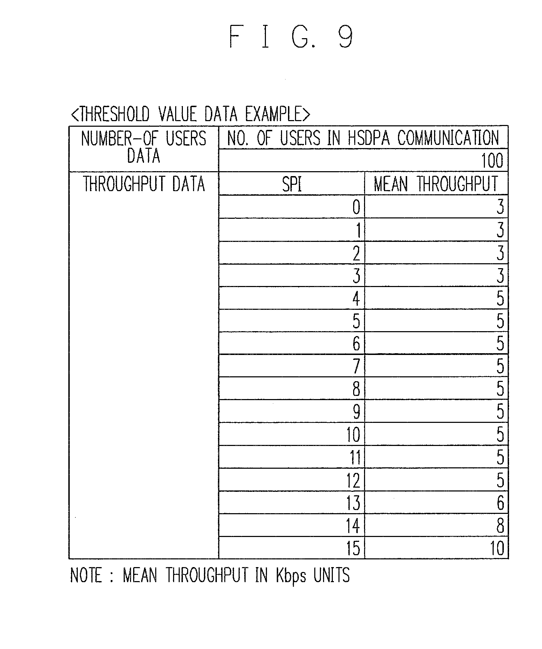

FIG. 9 shows an example of threshold value data employed for the call admission control according to the exemplary embodiment. In the radio network controller 200, the threshold value data is stored in the threshold value storage 221 of the radio resource controller 220 to be compared with measured values in the number-of-users comparison and the throughput comparison in the call admission control. The threshold value data includes number-of-users data which represents a threshold value for the number of users in the HSDPA communication and which is used for the number-of-users comparison, and the throughput data for the throughput comparison indicating a threshold value for the mean throughput for each SPI. The number-of-users data and the throughput data may be designated arbitrarily. Particularly, the throughput data may be specifically and individually set as a threshold value for each SPI.

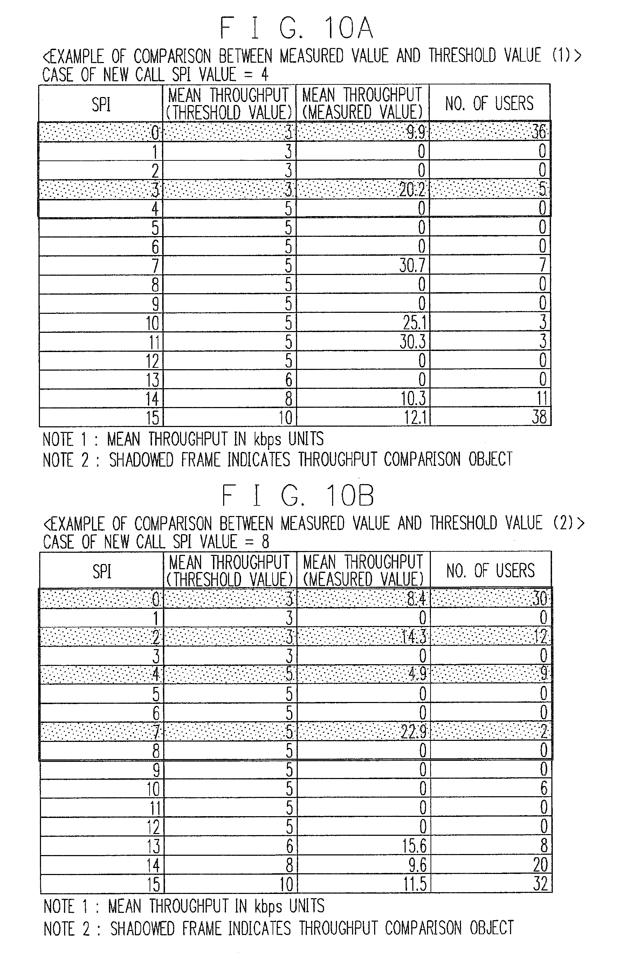

FIGS. 10A and 10B are diagrams showing examples of data comparison employed for the call admission control in the exemplary embodiment. In the examples shown using tables, each column includes four items, i.e., an SPI, a mean throughput (threshold value), a mean throughput (measured value), and the number of users. However, these data are temporary data of threshold value and measured value read from the threshold value storage 221 and the measured value storage 222 to be loaded in the buffer 204 for the number-of-users comparison and the throughput comparison.

Description will now be given by referring to FIG. 10A. It is assumed that the new call has an SPI value of four and the HSDPA communication is associated with the SPI value ranging from 0 to 12. Then, the measured value of the number of users in the HSDPA communication is 56, i.e., less than the number-of-users threshold value (= 100). Hence, the throughput comparison is next carried out. SPI classes which have an SPI value equal to or less than the SPI value of the new call and which have at least one user (the number of users is not zero) are selected as comparison objects for the comparison with the threshold value of the mean throughput. That is, the mean throughputs of the shadowed frames (SPI = 0 and 3) are selected as the comparison objects in the throughput comparison. If the measured value is equal to or more than the threshold value for all SPI classes, admission of the new call is allowed. In this situation, since the measured value is equal to or more than the threshold value for the SPI classes thus selected, the admission of the new call of the HSDPA user is allowed.

Next, description will be given of the comparison in conjunction with FIG. 10B. It is assumed that the new call has an SPI value of eight and the HSDPA communication is associated with the SPI value from 0 to 12 as in FIG. 10A. Then, the measured value of the number of users in the HSDPA communication is 59 and hence is less than the number-of-users threshold value (= 100). Therefore, the throughput comparison is subsequently conducted. As in the case of FIG. 10A, SPI classes which have an SPI value equal to or less than the SPI value of the new call and which have at least one user are designated as comparison objects for the throughput comparison. That is, SPI classes for SPI = 0, 2, 4, and 7 in the shadowed frames are selected as the comparison objects in the comparison. For the SPI class of SPI = 4, the measured value (= 4.9) is less than the threshold value. That is, the measured value is not equal to or more than the threshold value for all SPI classes, admission of the new call of the HSDPA user is not allowed.

According to the exemplary embodiment, there is attained a first advantage in which when the best effort service and other services such as voice call and streaming services are provided by using a shared channel, the throughput is confirmed for each priority level at admission of each call. This resultantly keeps the throughput of the best effort service at an appropriate value, namely, the throughput is not excessively lowered.

Additionally, the exemplary embodiment leads to a second advantage in which by conducting the call admission control on the basis of the throughput as described above, it is possible to keep the throughput of each priority level at a desired threshold value or more.

### <Second exemplary embodiment>

The second exemplary embodiment of the radio communication system in accordance with the present invention accomplishes call admission control as in the first exemplary embodiment. The second exemplary embodiment differs from the first exemplary embodiment in that combination radio base stations 500 possessing the functions of the radio controller and the radio base station are connected to the core network 100 to communicate data by radio with the mobile terminals 400.

FIG. 11 shows a system configuration of the exemplary embodiment of the radio communication system. The radio communication system includes a core network 100, combination radio base stations 500 (500a to 500c), and mobile terminals 400 (400a to 400c). Although three combination radio base stations 500 and three mobile terminals 400 are arranged in FIG. 11, there may be arranged a desired number of base stations 500 and mobile terminals 400 according to necessity.

As described above, the combination radio base station 500 includes the functions of the radio network controller 200 and the radio base station 300 of the first exemplary embodiment. The combination radio base station 500 measures the throughput for each user to obtain a mean throughput for each SPI. Using the measured value of the mean throughput and the threshold value, the combination radio base station 500 carries out call admission control (determines allowance or rejection for the admission of a new call) on the basis of the throughput described above.

According to the second exemplary embodiment, there is attained a first advantage in which by combining the radio controller with the radio base station, the radio communication system is simplified in structure, which resultantly lowers the installation cost of the constituent components.

There is also obtained a second advantage according to the second exemplary embodiment. That is, since the radio controller is combined with the radio base station, it is possible to dispense with operations such as an operation to transmit, at a predetermined timing, the mean throughput calculated for each SPI. The call admission controller need not receive at each transmission timing the radio environment information including such as the mean throughput, the number of users in communication, and a radio state. Therefore, it is possible to carry out the call admission control by use of the latest radio environment information in any situation.

The call admission control program to be executed by the radio network controller 200 of the exemplary embodiments is implemented in a module configuration including the respective modules of the radio resource controller 220, specifically, the threshold value storage 221, the measured value storage 222, the number-of-users comparator 223, the throughput comparator 224, and the new call admission module 225. The specific constituent components of the program are realized using actual hardware products. In other words, the CPU 201 reads a document and image processing program from a predetermined recording medium to execute the program to load the respective components on the main storage. As a result, the threshold value storage 221, the measured value storage 222, the number-of-users comparator 223, the throughput comparator 224, and the new call admission module 225 are produced on the main storage.

In the exemplary embodiments, a mean throughput calculation program to be executed by the radio base station 300 includes sections, i.e., the scheduling section 305 and the data measuring section 306 and is specifically implemented using hardware products. When the CPU 301 reads a document and image display program from a predetermined recording medium to execute the program to load the respective components on the main storage. This resultantly creates the scheduling section 305 and the data measuring section 306 on the main storage.

It is also possible that the call admission control program of the radio network controller 200 and the mean throughput calculation program of the radio base station 300 are stored in a computer connected to a network such as the Internet. The programs may be downloaded via the network to be provided to the user. These programs may also be provided or distributed via a network such as the Internet.

The call admission control program and the mean throughput calculation program may also be recorded to be provided in a file of an installable format or an executable format in a computer-readable recording medium such as a floppy (registered trademark) disk, a hard disk, an optical disk, a magneto-optical disk, a Compact Disk Read Only Memory (CD-ROM), a CD-R, a Digital Versatile Disk (DVD), or a nonvolatile memory card. In addition, these programs may be beforehand incorporated in an ROM or the like to be supplied to the user.

In this situation, when the program code read from the recording medium or loaded via a communication is executed, the program code itself implements the functions of the exemplary embodiments. The present invention also includes a recording medium having recorded the program code.

While the invention has been particularly shown and described with reference to exemplary embodiments thereof, the invention is not limited to these exemplary embodiments. It will be understood by those of ordinary skill in the art that various changes in form and details may be made therein without departing from the spirit and scope of the present invention as defined claims.

An example 1 describes a radio controller for conducting call admission control for data communication between a radio terminal and a radio base station using a shared channel, comprising: a transceiver section for receiving, from a core network, a call admission request for a new call of data communication using the shared channel; and a radio resource control section for admitting the new call if a throughput of existing calls assigned with a priority level equal to or less than a priority level set to the new call is equal to or more than a threshold value and for rejecting the new call if the throughput is less than the threshold value.

An example 2 describes the radio controller in accordance with the example 1, wherein the radio resource control section admits the new call if the number of users in communication via existing calls on the shared channel is less than a threshold value and conducts determination for admission of the new call on the basis of the throughput if the number of users is equal to or more than the threshold value.

An example 3 describes the radio controller in accordance with the examples 1 or 2, wherein the throughput of existing calls on the shared channel is data for each priority level class and is a mean throughput with the number of users of each priority level class set as a modulus.

An example 4 describes the radio controller in accordance with one of the examples 1 to 3, wherein the threshold value regarding the throughput is a threshold value set for each priority level class.

An example 5 describes the radio controller in accordance with one of the examples 1 to 4, wherein the radio resource control section compares a throughput of existing calls assigned with a priority level equal to or less than the priority level set to the new call with the threshold value regarding the throughput, for one and the same priority level.

An example 6 describes the radio controller in accordance with one of the examples 1 to 5, wherein the radio resource control section compares only a throughput, assigned with a priority level class having at least one user, of existing calls assigned with a priority level equal to or less than the priority level set to the new call with the threshold value regarding the throughput.

An example 7 describes the radio controller in accordance with one of the examples 1 to 6, wherein the radio resource control section acquires the throughput of existing calls on the shared channel from the radio base station.

An example 8 describes the radio controller in accordance with one of the examples 1 to 7, wherein the radio resource control section periodically acquires the throughput of existing calls on the shared channel from the radio base station and updates the throughput therein.

An example 9 describes a radio base station for conducting data communication with a radio terminal using a shared channel, the radio base station periodically transmitting a mean throughput calculated for each priority level class with the number of users of each priority level class set as a modulus on the basis of data communication with the radio terminal, as a throughput of existing calls on the shared channel to a radio controller comprising a transceiver section for receiving, from a core network, a call admission request for a new call of data communication using the shared channel; and a radio resource control section for admitting the new call if a throughput of existing calls assigned with a priority level equal to or less than a priority level set to the new call is equal to or more than a threshold value and for rejecting the new call if the throughput is less than the threshold value.

An example 10 describes a radio communication system comprising a radio terminal, a radio base station for conducting data communication with the radio terminal, and a radio controller for conducting call admission control for data communication between the radio terminal and the radio base station using a shared channel, wherein the radio controller comprises: a transceiver section for receiving, from a core network, a call admission request for a new call of data communication using the shared channel; and a radio resource control section for admitting the new call if a throughput of existing calls assigned with a priority level equal to or less than a priority level set to the new call is equal to or more than a threshold value and for rejecting the new call if the throughput is less than the threshold value.

An example 11 describes the radio communication system in accordance with the example 10, wherein the radio resource control section admits the new call if the number of users in communication via existing calls on the shared channel is less than a threshold value and conducts determination for admission of the new call on the basis of the throughput if the number of users is equal to or more than the threshold value.

An example 12 describes the radio communication system in accordance with the examples 10 or 11, wherein the throughput of existing calls on the shared channel is data for each priority level class and is a mean throughput with the number of users of each priority level class set as a modulus.

An example 13 describes the radio communication system in accordance with one of the examples 10 to 12, wherein the threshold value regarding the throughput is a threshold value set for each priority level class.

An example 14 describes the radio communication system in accordance with one of the examples 10 to 13, wherein the radio resource control section compares a throughput of existing calls assigned with a priority level equal to or less than the priority level set to the new call with the threshold value regarding the throughput, for one and the same priority level.

An example 15 describes the radio communication system in accordance with one of the examples 10 to 14, wherein the radio resource control section compares only a throughput, assigned with a priority level class having at least one user, of existing calls assigned with a priority level equal to or less than the priority level set to the new call with the threshold value regarding the throughput.

An example 16 describes the radio communication system in accordance with one of the examples 10 to 15, wherein the radio resource control section acquires the throughput of existing calls on the shared channel from the radio base station.

An example 17 describes the radio communication system in accordance with one of the examples 10 to 16, wherein the radio resource control section periodically acquires the throughput of existing calls on the shared channel from the radio base station and updates the throughput therein.

An example 18 describes a call admission control method for data communication between a radio terminal and a radio base station using a shared channel, comprising: a call admission request receiving step of receiving, from a core network, a call admission request for a new call of data communication using the shared channel; and a call admission determination step of admitting the new call if a throughput of existing calls assigned with a priority level equal to or less than a priority level set to the new call is equal to or more than a threshold value and of rejecting the new call if the throughput is less than the threshold value.

An example 19 describes the call admission control method in accordance with the example 18, wherein the call admission determination step admits the new call if the number of users in communication via existing calls on the shared channel is less than a threshold value and conducts determination for admission of the new call on the basis of the throughput if the number of users is equal to or more than the threshold value.

An example 20 describes a program for making a radio controller conduct call admission control for data communication between a radio terminal and a radio base station using a shared channel, the program making a computer implement: a call admission request receiving function for receiving, from a core network, a call admission request for a new call of data communication using the shared channel; and a call admission determination function for admitting the new call if a throughput of existing calls assigned with a priority level equal to or less than a priority level set to the new call is equal to or more than a threshold value and for rejecting the new call if the throughput is less than the threshold value.

An example 21 describes the program in accordance with the example 20, wherein the call admission determination function admits the new call if the number of users in communication via existing calls on the shared channel is less than a threshold value and conducts determination for admission of the new call on the basis of the throughput if the number of users is equal to or more than the threshold value.

An example 22 describes the recording medium for recording the program in accordance with the example 20 or 21, the recording medium being readable by a computer.

In a further advantageous refinement, it is provided that a radio controller for conducting call admission control for data communication between a radio terminal and a radio base station using a shared channel, comprises a transceiver section for receiving, from a core network, a call admission request for a new call of data communication using the shared channel and that a radio resource control section for admitting the new call if a throughput of existing calls assigned with a priority level equal to or less than a priority level set to the new call is equal to or more than a threshold value and for rejecting the new call if the throughput is less than the threshold value.

In a further advantageous refinement, it is provided that the radio resource control section admits the new call if the number of users in communication via existing calls on the shared channel is less than a threshold value and conducts determination for admission of the new call on the basis of the throughput if the number of users is equal to or more than the threshold value.

In a further advantageous refinement, it is provided that the throughput of existing calls on the shared channel is data for each priority level class and is a mean throughput with the number of users of each priority level class set as a modulus.

In a further advantageous refinement, it is provided that the threshold value regarding the throughput is a threshold value set for each priority level class.

In a further advantageous refinement, it is provided that the radio resource control section compares a throughput of existing calls assigned with a priority level equal to or less than the priority level set to the new call with the threshold value regarding the throughput, for one and the same priority level.

In a further advantageous refinement, it is provided that the radio resource control section compares only a throughput, assigned with a priority level class having at least one user, of existing calls assigned with a priority level equal to or less than the priority level set to the new call with the threshold value regarding the throughput.

In a further advantageous refinement, it is provided that the radio resource control section acquires the throughput of existing calls on the shared channel from the radio base station.

In a further advantageous refinement, it is provided that the radio resource control section periodically acquires the throughput of existing calls on the shared channel from the radio base station and updates the throughput therein.

In a further advantageous refinement, it is provided that a radio base station for conducting data communication with a radio terminal using a shared channel, the radio base station periodically transmitting a mean throughput calculated for each priority level class with the number of users of each priority level class set as a modulus on the basis of data communication with the radio terminal, as a throughput of existing calls on the shared channel to a radio controller comprising a transceiver section for receiving, from a core network, a call admission request for a new call of data communication using the shared channel and that a radio resource control section for admitting the new call if a throughput of existing calls assigned with a priority level equal to or less than a priority level set to the new call is equal to or more than a threshold value and for rejecting the new call if the throughput is less than the threshold value.

In a further advantageous refinement, it is provided that the radio controller comprises a transceiver section for receiving, from a core network, a call admission request for a new call of data communication using the shared channel and that a radio resource control section for admitting the new call if a throughput of existing calls assigned with a priority level equal to or less than a priority level set to the new call is equal to or more than a threshold value and for rejecting the new call if the throughput is less than the threshold value.

In a further advantageous refinement, it is provided that the radio resource control section admits the new call if the number of users in communication via existing calls on the shared channel is less than a threshold value and conducts determination for admission of the new call on the basis of the throughput if the number of users is equal to or more than the threshold value.

In a further advantageous refinement, it is provided that the throughput of existing calls on the shared channel is data for each priority level class and is a mean throughput with the number of users of each priority level class set as a modulus.

In a further advantageous refinement, it is provided that the threshold value regarding the throughput is a threshold value set for each priority level class.

In a further advantageous refinement, it is provided that the radio resource control section compares a throughput of existing calls assigned with a priority level equal to or less than the priority level set to the new call with the threshold value regarding the throughput, for one and the same priority level.

In a further advantageous refinement, it is provided that the radio resource control section compares only a throughput, assigned with a priority level class having at least one user, of existing calls assigned with a priority level equal to or less than the priority level set to the new call with the threshold value regarding the throughput.

In a further advantageous refinement, it is provided that the radio resource control section acquires the throughput of existing calls on the shared channel from the radio base station. In a further advantageous refinement, it is provided that the radio resource control section periodically acquires the throughput of existing calls on the shared channel from the radio base station and updates the throughput therein.

In a further advantageous refinement, it is provided that a call admission control method for data communication between a radio terminal and a radio base station using a shared channel, comprises a call admission request receiving step of receiving, from a core network, a call admission request for a new call of data communication using the shared channel and further a call admission determination step of admitting the new call if a throughput of existing calls assigned with a priority level equal to or less than a priority level set to the new call is equal to or more than a threshold value and of rejecting the new call if the throughput is less than the threshold value.

In a further advantageous refinement, it is provided that the call admission determination step admits the new call if the number of users in communication via existing calls on the shared channel is less than a threshold value and conducts determination for admission of the new call on the basis of the throughput if the number of users is equal to or more than the threshold value.

In a further advantageous refinement, it is provided that a call admission request receiving function for receiving, from a core network, a call admission request for a new call of data communication using the shared channel and that a call admission determination function for admitting the new call if a throughput of existing calls assigned with a priority level equal to or less than a priority level set to the new call is equal to or more than a threshold value and for rejecting the new call if the throughput is less than the threshold value.

In a further advantageous refinement, it is provided that the call admission determination function admits the new call if the number of users in communication via existing calls on the shared channel is less than a threshold value and conducts determination for admission of the new call on the basis of the throughput if the number of users is equal to or more than the threshold value.

In a further advantageous refinement, it is provided that the recording medium is readable by a computer.

## Claims

1. Radio controller for conducting call admission control for data communication between a radio terminal and a radio base station using a shared channel, **characterized by**
a transceiver section for receiving, from a core network, a call admission request for a new call of data communication using the shared channel; and
a radio resource control section for admitting the new call if a throughput of existing calls assigned with a priority level equal to or less than a priority level set to the new call is equal to or more than a threshold value and for rejecting the new call if the throughput is less than the threshold value.

2. Radio controller according to one of the preceding claims, **characterized in that** the radio resource control section admits the new call if the number of users in communication via existing calls on the shared channel is less than a threshold value and conducts determination for admission of the new call on the basis of the throughput if the number of users is equal to or more than the threshold value.

3. Radio controller according to one of the preceding claims, **characterized in that** the throughput of existing calls on the shared channel is data for each priority level class and is a mean throughput with the number of users of each priority level class set as a modulus.

4. Radio controller according to one of the preceding claims, **characterized in that** the threshold value regarding the throughput is a threshold value set for each priority level class.

5. Radio controller according to one of the preceding claims, **characterized in that** the radio resource control section compares a throughput of existing calls assigned with a priority level equal to or less than the priority level set to the new call with the threshold value regarding the throughput, for one and the same priority level.

6. Radio controller according to one of the preceding claims, **characterized in that** the radio resource control section compares only a throughput, assigned with a priority level class having at least one user, of existing calls assigned with a priority level equal to or less than the priority level set to the new call with the threshold value regarding the throughput.

7. Radio controller according to one of the preceding claims, **characterized in that** the radio resource control section acquires the throughput of existing calls on the shared channel from the radio base station.

8. Radio controller according to one of the preceding claims, **characterized in that** the radio resource control section periodically acquires the throughput of existing calls on the shared channel from the radio base station and updates the throughput therein.

9. Radio base station for conducting data communication with a radio terminal using a shared channel, **characterized in that** the radio base station is adapted to periodically transmit a mean throughput calculated for each priority level class with the number of users of each priority level class set as a modulus on the basis of data communication with the radio terminal, as a throughput of existing calls on the shared channel to a radio controller according to one of the claims 1 to 9.

10. Radio communication system **characterized by** a radio terminal, a radio base station for conducting data communication with the radio terminal, and a radio controller according to one of the claims 1 to 9.

11. Call admission control method for data communication between a radio terminal and a radio base station using a shared channel, the method is **characterized by:**
a call admission request receiving step of receiving, from a core network, a call admission request for a new call of data communication using the shared channel and
a call admission determination step of admitting the new call if a throughput of existing calls assigned with a priority level equal to or less than a priority level set to the new call is equal to or more than a threshold value and of rejecting the new call if the throughput is less than the threshold value.

12. Call admission control of claim 18, **characterized in that** the call admission determination step admits the new call if the number of users in communication via existing calls on the shared channel is less than a threshold value and conducts determination for admission of the new call on the basis of the throughput if the number of users is equal to or more than the threshold value.

13. Program for making a radio controller conduct call admission control for data communication between a radio terminal and a radio base station using a shared channel, **characterized in that** the program is adapted to make a computer implement a method according to claim 18 or 19.

14. Recording medium for recording the program in accordance with claim 20, **characterizied in that** the recording medium is readable by a computer.
